# EUROPÄISCHE PATENTSCHRIFT

(11) **EP 3 140 181 B1**
(45) Veröffentlichungstag und Bekanntmachung des Hinweises auf die Patenterteilung: **14.03.2018**
(21) Anmeldenummer: 15727534.8
(22) Anmeldetag: 07.05.2015
(51) Int. Cl.: B62J 1/12, B62K 19/46

(54) **GEPÄCKVERSTAUEINRICHTUNG FÜR EIN MOTORISIERTES ZWEIRAD**
STORAGE DEVICE FOR MOTORISED TWO WHEELER
DISPOSITIF DE STOCKAGE POUR VEHICULE A MOTEUR A DEUX ROUES

(30) Priorität: 07.05.2014 AT 3372014
(43) Veröffentlichungstag der Anmeldung: 15.03.2017
(73) Patentinhaber: Lohnerwerke GmbH, 1090 Wien (AT)
(72) Erfinder: MELCHER, Norbert, A-8010 Graz (AT); SCHACHT, Hans-Jürgen, A-8055 Graz (AT)
(74) Vertreter: Keschmann, Marc
(86) Internationale Anmeldenummer: PCT/AT2015/000068
(87) Internationale Veröffentlichungsnummer: WO 2015/168713

(56) Entgegenhaltungen:
- FR-A1- 2 698 603
- JP-A- H 107 048
- JP-A- H03 167 087
- JP-A- H08 310 473
- JP-A- 2007 030 828
- JP-U- S4 726 753
- JP-U- S6 455 184

## Beschreibung

Die Erfindung betrifft eine Gepäckverstaueinrichtung für ein motorisiertes Zweirad, umfassend einen Sitz, der einen Fahrersitzabschnitt und einen an den hinteren Bereich des Fahrersitzabschnitts anschließenden Beifahrersitzabschnitt aufweist, ein dem Beifahrersitzabschnitt zugeordneter Haltegriff, und einen Gepäckkasten unterhalb des Sitzes, wobei der Sitz schwenkbar befestigt ist und im nach oben verschwenkten Zustand eine Gepäckzugriffsöffnung des Gepäckkastens in einem ersten Bereich freilegt.

Unter einem motorisierten Zweirad wird im Rahmen der vorliegenden Erfindung ein Zweirad verstanden, dessen Fahrantrieb einen Motor umfasst. Der Motor kann zum Beispiel als Verbrennungsmotor oder als Elektromotor ausgebildet sein. Das Zweirad kann ein Motorrad, ein Motorroller, ein Moped, ein Elektromotorroller oder dgl. sein.

Motorisierte Zweiräder sind oftmals mit wenigstens einer Gepäckverstaueinrichtung ausgestattet, wie dies beispielsweise aus der DE 10130098 B4 bekannt ist. Der zu öffnende und zu schließende Gepäckkasten mit großem Aufnahmevermögen zur Unterbringung beispielsweise eines Helms oder dergleichen kann bei einem solchen Motorrad, insbesondere bei einem Motorroller, unter dem Sitz angeordnet sein. Herkömmliche Beispiele für eine derartige Gepäckverstaueinrichtung oder einen Gepäckkasten dieser Art sind zum Beispiel in der japanischen Patent-Offenlegungsschrift JP 1-148679 A, der japanischen Gebrauchsmusterveröffentlichung JP 1-58388 A und der japanischen Patent-Offenlegungsschrift JP 6-156344 A gezeigt.

Die JP 3-21577 A beschreibt eine Gepäckverstaueinrichtung für Motorroller, welche unterhalb des Fahrersitzes angebracht ist. Die Gepäckverstaueinrichtung umfasst einen Gepäckkasten und lässt sich durch Öffnen und Schließen des Sitzes öffnen und schließen. Der Gepäckkasten ist in einem hinteren Bereich einer Fahrzeugkarosserie des Motorrollers und oberhalb eines Hinterrads angeordnet. Des Weiteren ist der Umfang des Gepäckkastens in Seitenansicht in der Mitte größer als an seinem oberen und unteren Ende. Der Gepäckkasten ist in Seitenansicht in der Mitte in eine obere und eine untere Halbschale geteilt.

Bei der aus der DE 10130098 B4 bekannt gewordenen Gepäckverstaueinrichtung wird im nach oben verschwenkten Zustand des Sitzes eine erste Gepäckzugriffsöffnung des Gepäckkastens und durch Öffnen eines gesonderten Deckels eine weitere Gepäckzugriffsöffnung freilegt. Die erste Gepäckzugriffsöffnung erlaubt einen Zugriff in den Hauptraum des Gepäckkastens, in dem beispielsweise zwei Helme Platz finden. Über die weitere Gepäckzugriffsöffnung können länglich ausgebildete Gepäcksgegenstände in den Gepäckkasten geschoben oder aus diesem herausgenommen werden.

In der JP 2007 030828 A ist eine Gepäckverstaueinrichtung für ein motorisiertes Zweirad, umfassend eine Sitz, der einen Fahrersitzabschnitt und einen an den hinteren Bereich des Fahrersitzabschnitts anschließenden Beifahrersitzabschnitt aufweist, ein dem Beifahrersitzabschnitt zugeordneter Haltegriff, und einen Gepäckkasten unterhalb des Sitzes, wobei der Sitz schwenkbar befestigt ist und im nach oben verschwenkten Zustand eine Gepäckzugriffsöffnung des Gepäckkasten in einem ersten Bereich freilegt beschrieben.

Nachteilig bei den beschriebenen Ausführungen von Gepäckverstaueinrichtungen ist, dass diese nur bei entsprechend großen Motorrädern in einer für die Aufbewahrung von zwei Helmen notwendigen Größe ausgebildet werden können. Bei kleineren Ausführungen von motorisierten Zweirädern, wie zum Beispiel bei Mopeds oder Elektromotorrollern, verhindert meist der für den Beifahrer vorgesehene Haltegriff die Ausbildung eines ausreichend großen Gepäckkastens. Der Haltegriff ist hierbei meist am Hinterende des Fahrzeugs angebracht, sodass der hintere Teil mit Rücksicht auf die erforderliche Stabilität des Haltegriffs nicht klappbar ausgeführt werden kann, etwa um einen Gepäckkasten zu öffnen.

Die Erfindung zielt daher darauf ab, eine Gepäckverstaueinrichtung der eingangs genannten Art dahingehend zu verbessern, dass diese auch bei kleineren Ausführungen von motorisierten Zweirädern in ausreichender Größe realisiert werden und mühelos geöffnet und wieder verschlossen werden kann.

Zur Lösung dieser Aufgabe ist die Gepäckverstaueinrichtung der eingangs genannten Art erfindungsgemäß derart weitergebildet, dass ein vom Sitz gesonderter Deckel vorgesehen ist, der am Haltegriff schwenkbar befestigt ist und im nach oben verschwenkten Zustand einen zweiten Bereich der Gepäckzugriffsöffnung freilegt. Die Erfindung beruht somit auf der Idee, den Haltegriff als Schwenklagerung für einen gesonderten Deckel mitzuverwenden, sodass die vom schwenkbaren Sitz und dem gesonderten Deckel zusammen gebildete Deckelfläche und damit auch die Längserstreckung des Gepäckkastens entsprechend vergrößert werden kann, ohne dass der Haltegriff versetzt werden oder überhaupt entfallen muss.

Der Gepäckkasten kann vorzugsweise ein solches Volumen aufweisen, dass darin zwei herkömmliche Helme hintereinander Platz finden.

Die Ausführung ist bevorzugt so getroffen, dass der Haltegriff von einem im Wesentlichen U- oder V-förmigen Halterohr gebildet ist, das bezüglich eines für die Verschwenkung des gesonderten Deckels vorgesehenen Scharniers symmetrisch ausgebildet ist. Das Scharnier ist insbesondere im Bereich der Symmetrieachse des Halterohrs an der hintersten Stelle desselben angeordnet, wobei sich die Schenkel der U- bzw. V-Form des Halterohrs zu beiden Seiten des Scharniers nach vorne erstrecken.

Allgemein ist anzumerken, dass die Begriffe "vorne" und "hinten" sich im Rahmen der Erfindung auf die Lage des Vorderrads bzw. des Hinterrads beziehen, während die Begriffe "obere" bzw. "oberer", "unten" und dergleichen von der Voraussetzung ausgehen, dass sich das Zweirad in aufrechter Stellung befindet.

Die beiden Schenkel der U- bzw. V-Form des Halterohrs sowie der sich dazwischen erstreckende, das Scharnier aufweisende Bereich des Rohrs sind vorzugsweise von der Karosserie des Zweirads beabstandet, um ein leichtes Ergreifen durch die Hände des Beifahrers zu ermöglichen. Die Endabschnitte der Schenkel sind vorzugsweise nach unten gebogen bzw. geknickt ausgeführt und an der tragenden Struktur des Zweirads befestigt.

Das Scharnier für die Verschwenkung des gesonderten Deckels ist vorzugweise in das Halterohr integriert. Insbesondere ist die Ausführung hierbei so gestaltet, dass die Schwenkachse des Scharniers mit der Rohrachse des Halterohrs fluchtet.

Das Schwenklager des Sitzes und das Scharnier des gesonderten Deckels sind mit Vorteil so angeordnet, dass der Sitz nach vorne und der gesonderte Deckel nach hinten aufklappbar sind. Das Schwenklager und das Scharnier sind somit an den voneinander abgewandten Enden des Deckels bzw. des Sitzes angeordnet. Dies gewährleistet im geöffneten Zustand eine freie Zugänglichkeit des gesamten Gepäckkastens.

Der Sitz und der gesonderte Deckel sind vorzugsweise so angeordnet, dass sie im geschlossenen Zustand des Gepäckkastens aneinander anschließen und vorzugsweise im Wesentlichen miteinander fluchtende Oberflächen ausbilden.

Die Festlegung des gesonderten Deckels erfolgt mit Vorteil so, dass der Sitz einen dem Sitz zugewandten Endabschnitt des gesonderten Deckels im geschlossenen Zustand übergreift. Insbesondere weist der dem Sitz zugewandte Endabschnitt des gesonderten Deckels einen Rücksprung auf, auf welchem ein Randabschnitt des Sitzes im geschlossenen Zustand aufliegt. Auf diese Weise hält das Eigengewicht des Sitzes den gesonderten Deckel nieder, sodass er in seiner geschlossenen Lage verbleibt. Zusätzlich kann der Sitz und ggf. auch der gesonderte Deckel mittels eines Rast- oder Verriegelungsmechanismus im geschlossenen Zustand gesichert und ggf. versperrt werden.

Der Gepäckkasten kann eine einzige Aufbewahrungskammer ausbilden, die sich sowohl unterhalb des Sitzes als auch unterhalb des gesonderten Deckels befindet. Bevorzugt kann der Gepäckkasten aber auch in zwei oder mehrere Aufbewahrungskammern unterteilt sein. Dabei kann die Unterteilung so gestaltet sein, dass eine erste Aufbewahrungskammer durch Aufklappen des Sitzes und eine zweite Aufbewahrungskammer durch Aufklappen des gesonderten Deckels zugänglich ist. Die Ausbildung ist hierbei insbesondere derart weitergebildet, dass der Gepäckkasten wenigstens zwei Aufbewahrungskammern aufweist, wobei einer ersten Aufbewahrungskammer der erste Bereich der Gepäckzugriffsöffnung und der zweiten Aufbewahrungskammer der zweite Bereich der Gepäckzugriffsöffnung zugeordnet ist.

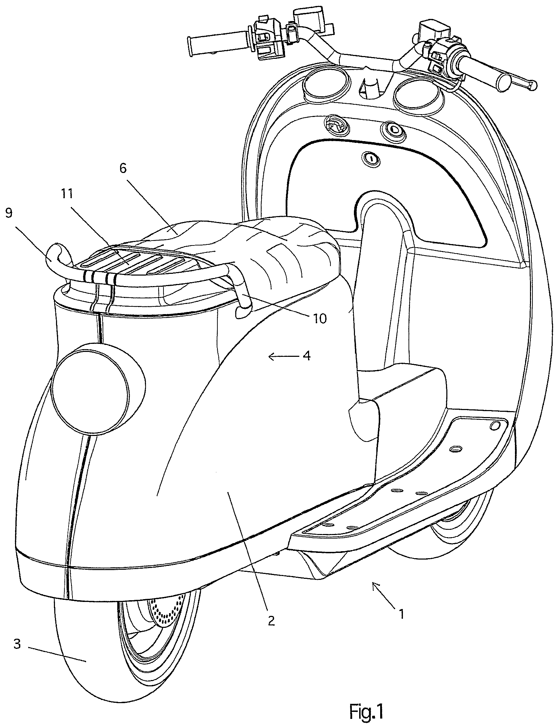

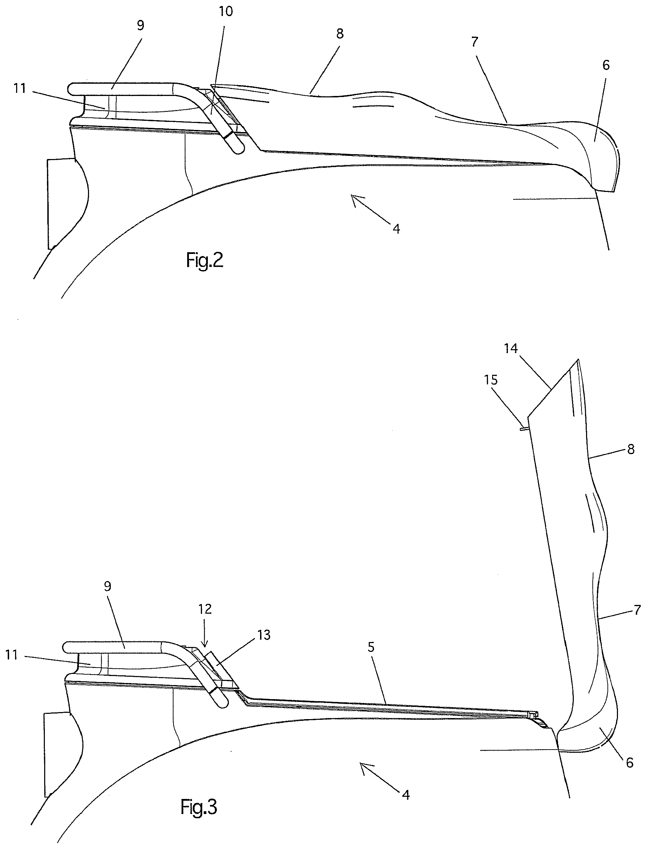

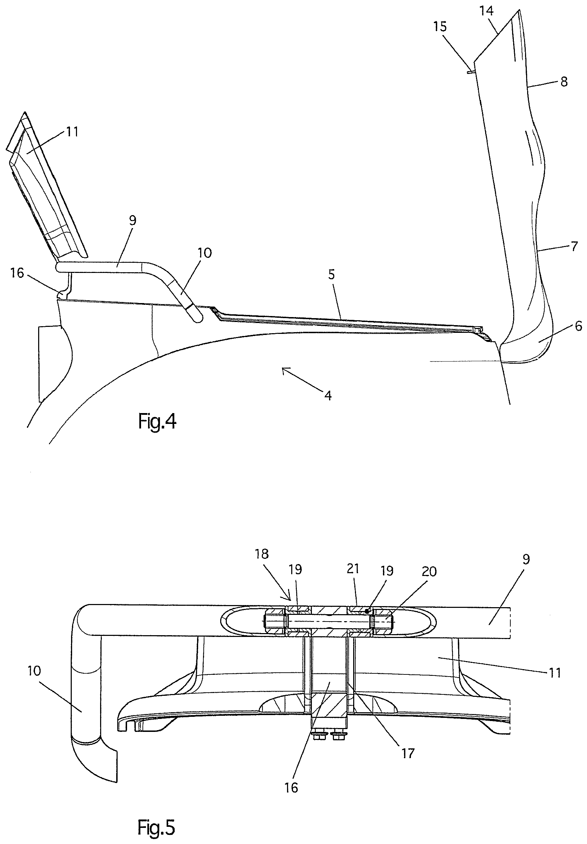

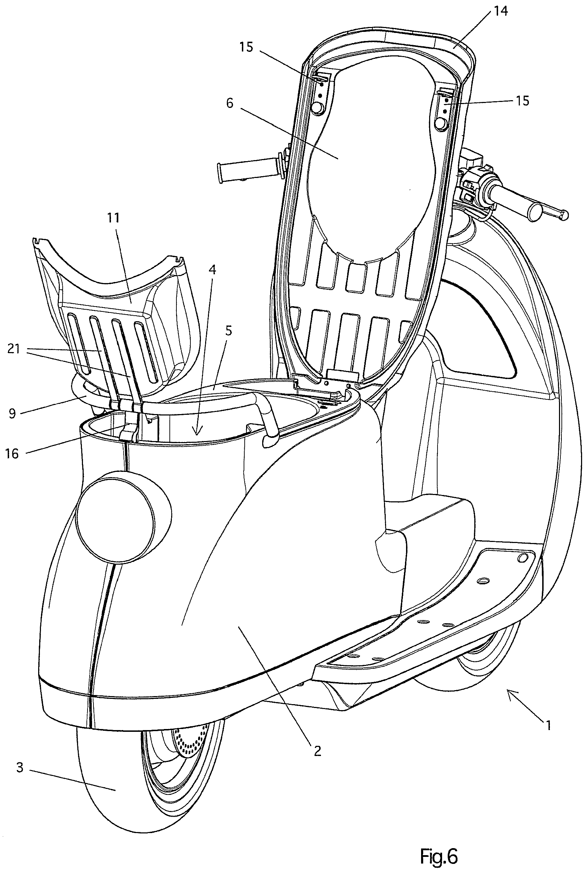

Die Erfindung wird nachfolgend anhand eines in der Zeichnung schematisch dargestellten Ausführungsbeispiels näher erläutert. In dieser zeigen Fig.1 einen Motorroller in perspektivischer Ansicht, Fig.2 eine Ansicht des Sitzes des Motorrollers gemäß Fig.1 von der Seite mit dem Gepäckkasten in geschlossenem Zustand, Fig.3 den Sitz gemäß Fig.2 mit abschnittsweise geöffnetem Gepäckkasten, Fig.4 den Sitz gemäß Fig.2 mit vollständig geöffnetem Gepäckkasten, Fig.5 eine Rückansicht des aufklappbaren Deckels teilweise im Schnitt und Fig.6 den Motorroller mit geöffnetem Gepäckkasten.

In Fig.1 ist ein Motorroller mit 1 bezeichnet und weist im hinteren Bereich eine Karosserie 2 auf, welche unter anderem den Antrieb für das Hinterrad 3 abdeckt. Weiters ummantelt die Karossiere 2 einen Gepäckkasten 4, dessen Gepäckzugriffsöffnung 5 durch Aufklappen des Sitzes 6 zugänglich wird.

In der Detailansicht gemäß Fig.2 ist ersichtlich, dass der Sitz 6 länglich ausgebildet ist und einen Fahrersitzabschnitt 7 und einen an den hinteren Bereich des Fahrersitzabschnitts 7 anschließenden Beifahrersitzabschnitt 8 aufweist. Dem Beifahrersitzabschnitt 8 ist ein Haltegriff 9 zugeordnet, der an der Karosserie bzw. am tragenden Grundrahmen des Motorrollers befestigt ist. Der Haltegriff 9 ist von einem im Wesentlichen U-förmig gebogenen Halterohr gebildet, wobei die freien Enden 10 der Schenkel der U-Form nach unten gebogen und mit der Karosserie verbunden sind. Der Haltegriff 9 ist so angeordnet, dass er an das Hinterende des Sitzes 8 anschließt, wobei der Haltegriff im hinten umlaufenden Abschnitt in Höhenrichtung so weit von der Karosserie beabstandet ist, dass er im Wesentlichen in einer Ebene mit der Oberfläche des Sitzes 6 verläuft.

Hinter dem Sitz 6 schließt nun ein vom Sitz 6 gesonderter Deckel 11 an, der am Haltegriff 9 schwenkbar befestigt ist und im nach oben verschwenkten Zustand einen hinteren Bereich der Gepäckzugriffsöffnung 5 freilegt.

Der Gepäckkasten 4 kann nun durch Aufklappen des Sitzes 6 nach vorne und danach durch Aufklappen des gesonderten Deckels 11 nach hinten vollständig geöffnet werden, um einen vergrößerten Stauraum zur Verfügung zu stellen. Fig.3 zeigt zunächst den nach vorne aufgeklappten Sitz, der einen vorderen Bereich der Gepäckzugriffsöffnung 5 freilegt. Dabei ist ersichtlich, dass der Sitz 6 einen dem Sitz 6 zugewandten Endabschnitt 12 des gesonderten Deckels 11 im geschlossenen Zustand übergreift. Der dem Sitz 6 zugewandte Endabschnitt 12 des gesonderten Deckels 11 weist hierzu einen Rücksprung 13 auf, auf welchem ein Randabschnitt 14 des Sitzes 6 im geschlossenen Zustand aufliegt. Mit 15 ist ein Vorsprung einer Rasteinrichtung bezeichnet, welcher im geschlossenen Zustand des Sitzes 6 mit einem Gegenglied am Rand der Gepäckzugriffsöffnung zusammenwirkt, um den Sitz 6 gegen unbeabsichtigtes Öffnen zu sichern.

Fig.4 zeigt den gesonderten Deckel 11 im nach hinten aufgeklappten Zustand. Dabei ist ersichtlich, dass das Scharnier des Deckels 11 in das Rohr des Haltegriffs 9 integriert ist. Um den Haltegriff 9 im hinteren Bereich zu stabilisieren, ist ein Steg 16 vorgesehen, der den Haltegriff an der Karosserie 2 abstützt. Der Deckel 11 weist eine dem Steg 16 entsprechende Aussparung 17 (Fig.5) auf, in welche der Steg 16 im geschlossenen Zustand des Deckels 11 zu liegen kommt.

In der Detailansicht gemäß Fig.5 ist ersichtlich, dass das Rohr des Haltegriffs 9 zum Zwecke der Aufnahme des Scharniers 18 des Deckels 11 zweigeteilt ist. Die zueinander weisenden Enden der beiden Rohrabschnitte sind jeweils mit einer Buchse 19 versehen, welche relativ zum Scharnierbolzen 20 drehbar gelagert sind und jeweils einen schwenkbaren Finger 21 tragen. Der Scharnierbolzen 20 durchsetzt eine Bohrung des Stegs 16. Die Schwenkachse des Scharniers 18 fluchtet somit mit der Rohrachse des Haltegriffs 9.

In der Gesamtdarstellung gemäß Fig.6 ist ersichtlich, das die erfindungsgemäße Konstruktion die Ausbildung eines besonders großvolumigen Gepäckkastens erlaubt. Weiters ist ersichtlich, dass die schwenkbaren Finger 21 an der Oberseite des Deckels 11 befestigt sind.

## Patentansprüche

1. Gepäckverstaueinrichtung für ein motorisiertes Zweirad, umfassend einen Sitz (6), der einen Fahrersitzabschnitt (7) und einen an den hinteren Bereich des Fahrersitzabschnitts (7) anschließenden Beifahrersitzabschnitt (8) aufweist, ein dem Beifahrersitzabschnitt (8) zugeordneter Haltegriff (9), und einen Gepäckkasten (4) unterhalb des Sitzes (6), wobei der Sitz (6) schwenkbar befestigt ist und im nach oben verschwenkten Zustand eine Gepäckzugriffsöffnung (5) des Gepäckkastens (4) in einem ersten Bereich freilegt, **dadurch gekennzeichnet, dass** ein vom Sitz (6) gesonderter Deckel (11) vorgesehen ist, der am Haltegriff (9) schwenkbar befestigt ist und im nach oben verschwenkten Zustand einen zweiten Bereich der Gepäckzugriffsöffnung (5) freilegt.

2. Einrichtung nach Anspruch 1, **dadurch gekennzeichnet, dass** der Haltegriff (9) von einem im Wesentlichen U- oder V-förmigen Halterohr gebildet ist, das bezüglich eines für die Verschwenkung des gesonderten Deckels (11) vorgesehenen Scharniers (18) symmetrisch ausgebildet ist.

3. Einrichtung nach Anspruch 2, **dadurch gekennzeichnet, dass** die Schwenkachse des Scharniers (18) mit der Rohrachse des Halterohrs fluchtet.

4. Einrichtung nach Anspruch 1, 2 oder 3, **dadurch gekennzeichnet, dass** der Sitz (6) nach vorne und der gesonderte Deckel (11) nach hinten aufklappbar ist.

5. Einrichtung nach einem der Ansprüche 1 bis 4, **dadurch gekennzeichnet, dass** der Sitz (6) einen dem Sitz (6) zugewandten Endabschnitt (12) des gesonderten Deckels (11) im geschlossenen Zustand übergreift.

6. Einrichtung nach Anspruch 5, **dadurch gekennzeichnet, dass** der dem Sitz (6) zugewandte Endabschnitt (12) des gesonderten Deckels (11) einen Rücksprung (13) aufweist, auf welchem ein Randabschnitt (14) des Sitzes (6) im geschlossenen Zustand aufliegt.

7. Einrichtung nach einem der Ansprüche 1 bis 6, **dadurch gekennzeichnet, dass** der Gepäckkasten (4) wenigstens zwei Aufbewahrungskammern aufweist, wobei einer ersten Aufbewahrungskammer der erste Bereich der Gepäckzugriffsöffnung (5) und der zweiten Aufbewahrungskammer der zweite Bereich der Gepäckzugriffsöffnung (5) zugeordnet ist.

## Claims

1. A luggage storage device for a motorized two-wheeler, comprising a seat (6) having a driver seat portion (7) and a passenger seat portion (8) adjoining the rear region of the driver seat portion (7), a handle (9) associated with the passenger seat portion (8), and a luggage box (4) under the seat (6), wherein the seat (6) is pivotally fastened and, in the upwardly pivoted position, uncovers a luggage access opening (5) of the luggage box (4) in a first region, **characterized in that** a lid (11) separate from the seat (6) is provided, which is pivotally fastened to the handle (9) and, in the upwardly pivoted position, uncovers a second region of the luggage access opening (5).

2. A device according to claim 1, **characterized in that** the handle (9) is comprised of a substantially U-shaped or V-shaped holding tube that is symmetrically configured in respect to a hinge (18) provided for pivoting the separate lid (11).

3. A device according to claim 2, **characterized in that** the pivot axis of the hinge (18) is aligned with the tube axis of the holding tube.

4. A device according to claim 1, 2 or 3, **characterized in that** the seat (6) is forwardly openable and the separate lid (11) is rearwardly openable.

5. A device according to any one of claims 1 to 4, **characterized in that** the seat (6), in the closed position, overlaps an end portion (12) facing the seat (6), of the separate lid (11).

6. A device according to claim 5, **characterized in that** the end portion (12) facing the seat (6), of the separate lid (11) comprises a shoulder (13), on which an edge portion (14) of the seat (6) rests in the closed position.

7. A device according to any one of claims 1 to 6, **characterized in that** the luggage box (4) comprises at least two storage compartments, a first storage compartment being associated with the first region of the luggage access opening (5) and the second storage compartment being associated with the second region of the luggage access opening (5).

## Revendications

1. Dispositif de stockage pour véhicule à moteur à deux roues, comprenant un siège (6) qui présente une section de siège de conducteur (7) et une section de siège de passager avant (8) se raccordant à la zone arrière de la section de siège de conducteur (7), une poignée de retenue (9) associée à la section de siège de passager avant (8), et un coffre à bagages (4) en dessous du siège (6), dans lequel le siège (6) est fixé de manière pivotante et libère dans l'état pivoté vers te haut une ouverture d'accès aux bagages (5) du coffre à bagages (4) dans une première zone, **caractérisé en ce qu'**un couvercle (11) séparé du siège (6) est prévu, lequel est fixé de manière pivotante sur la poignée de retenue (9) et libère dans l'état pivoté vers le haut une seconde zone de l'ouverture d'accès aux bagages (5).

2. Dispositif selon la revendication 1, **caractérisé en ce que** la poignée de retenue (9) est formée par un tube de retenue sensiblement en forme de U ou V qui est réalisé symétrique par rapport à une charnière (18) prévue pour le picotement du couvercle (11) séparé.

3. Dispositif selon la revendication 2, **caractérisé en ce que** l'axe de pivotement de la charnière (18) s'aligne sur l'axe tubulaire du tube de retenue.

4. Dispositif selon la revendication 1, 2 ou 3, **caractérisé en ce que** le siège (6) peut être rabattu vers l'avant et le couvercle (11) séparé peut être rabattu vers l'arrière.

5. Dispositif selon l'une quelconque des revendications 1 à 4, **caractérisé en ce que** le siège (6) recouvre une section d'extrémité (12) tournée vers le siège (6) du couvercle séparé (11) dans l'état fermé.

6. Dispositif selon la revendication 5, **caractérisé en ce que** la section d'extrémité (12) tournée vers le siège (6) du couvercle séparé (11) présente un décrochement (13) sur lequel une section de bord (14) du siège (6) repose dans l'état fermé.

7. Dispositif selon l'une quelconque des revendications 1 à 6, **caractérisé en ce que** le coffre à bagages (4) présente au moins deux chambres de stockage, dans lequel à une première chambre de stockage est associée la première zone de l'ouverture d'accès de bagages (5) et à la seconde chambre de stockage est associée la seconde zone de l'ouverture d'accès de bagages (5).
